# EUROPEAN PATENT APPLICATION

(11) **EP 1 898 346 A1**
(43) Date of publication of application: **12.03.2008**
(21) Application number: 06119774.5
(22) Date of filing: 30.08.2006
(51) Int. Cl.: G06Q 10/00

(54) **Automatic attachment of image and/or audio records to electronic calendar meeting event record in portable wireless devices**

(71) Applicant: Research In Motion Limited, Waterloo, Ontario N2L 3W8 (CA)
(72) Inventor: May, Darrell R., Waterloo Ontario N2V 2K6 (CA); Bredin, Robert J.T., Guelph Ontario N1G 4R8 (CA); Zinn, Ronald Scotte, Waterloo Ontario N2L 5TP (CA)
(74) Representative: Hibbert, Juliet Jane Grace

(57) **Abstract**

A user option is provided for creating or selecting an electronic image and/or audio auxiliary record in real-time during a calendared meeting event and automatically attaching such auxiliary record to a respectively associated meeting event record in the electronic calendar of a portable wireless communication device.

## Description

### BACKGROUND

### 1. Technical Field

This application generally relates to operation of a computerized event calendar. More specifically, it relates an enhanced computerized event calendar in a portable wireless device wherein a user option is presented for capturing and automatically associating an auxiliary record (e.g., a picture or voice note) with a user-selected calendar meeting event record (e.g., while the meeting is being conducted).

### 2. Related Art

Computer-based portable wireless electronic devices of many sorts now provide computerized electronic event calendars having meeting event records respectively associated with a chronological calendar entry. Many portable electronic devices also have audio recording and camera imaging capabilities. While some such computerized event calendars permit attachment of pre-existing records or files already present in the computer memory, these earlier computerized event calendars are not particularly well suited for updating a calendar meeting event record with image and/or audio records in real-time during the meeting event.

There are applications and hardware that allow the contents of a whiteboard or a picture from a digital camera to be made available on a desktop computer. Similarly, audio may be recorded on a desktop computer as well. These pictures or audio files can then be manually added to a calendar meeting entry as attachments. However, there is no automated way to do the work in a single step. As well, the calendar applications on the desktop are not aware of the types of attachments being added to the meeting entry.

### BRIEF SUMMARY

A user-option in a portable wireless device for attaching image (e.g., still pictures or video) and/or audio (e.g., voice note) records to electronic calendar meeting event records in real-time during the meeting event would be a considerable advantageespecially for computerized event calendars contained in hand-held devices (e.g., hand-held wireless communication devices). Such an ability is described in the exemplary system described herein.

In an exemplary embodiment described below, records created by image/video/audio capture features of a portable wireless device can be automatically attached to (i.e., associated with for future recall) the calendar meeting event record (which device can easily be carried to the meeting itself for such purpose). In effect, the meeting event record itself can be updated (essentially in real-time if desired) with meeting-related content (e.g., voice notes, still images, video moving images, etc.).

For example, during a scheduled meeting, the corresponding calendared meeting entry record may be made active on a portable device in a participating user's possession. During that meeting, pictures may be taken of white boards, slide shows, attendees, meeting notes, etc. Such additional records captured during the meeting may be automatically attached to the concurrently opened calendared meeting event record as discussed below.

In systems where the calendar meeting event record is automatically or otherwise shared among attendees, the attendees may all have access to such automatically updated meeting event records (e.g., each attendee may have access to pictures taken by all other attendees during the meeting for subsequent reference, if interested). In addition, the updated meeting event record and/or attachments thereto can be sent to others outside the meeting invitee list if desired or can be forwarded on to others via conventional compatible electronic messaging processes.

The same process can be applied to electronically captured audio records, e.g., voice notes. The audio recording features of a portable electronic device can be used to capture parts (or perhaps the whole) of the meeting for automatic attachment to the calendared meeting event record -- and subsequently made available via normal electronic calendar functions to all invitees, the meeting organizer, meeting delegates or others as may be desired via suitable electronic messaging and/or automatic sharing of calendared meeting event records as company policy/calendar function design permits or dictates.

In short, a portable electronic device (e.g., a wireless communication device) can be adapted to automatically associate newly captured meeting content-related image and/or audio records with the calendar meeting event record and to send such updated meeting data to other attendees (or even those who did not attend the meeting).

This subject matter may be embodied in hardware, software or a combination of hardware and software. it also provides a method for operating a computerized event calendar in a portable wireless device such that meeting-related image and/or audio data can be easily captured and automatically associated with an electronic calendar meeting event record. The exemplary embodiment is realized, at least in part, by executable computer program code (i.e., logic) which may be embodied in physical program memory media.

### BRIEF DESCRIPTION OF THE DRAWINGS

These and other objects and advantages will be better understood and appreciated in conjunction with the following detailed description of exemplary embodiments taken together with the accompanying drawings, in which:
FIG. **1** is an overall system-wide schematic view of an exemplary wireless email communication system incorporating a mobile wireless communication device with an event calendar having the ability to automatically associate image and/or voice records with a calendar meeting event record in accordance with one exemplary embodiment;
FIG. **2** is an abbreviated schematic diagram of hardware included within the exemplary mobile wireless communication device of FIG. **1;**
FIGS. **3-6** are exemplary abbreviated schematic flow charts of computer software (i.e., program logic) that may be utilized in the device of FIG. **2** to provide user options for capturing and adding pictures or voice notes to a selected calendar meeting event record during the meeting; and
FIGS. **7-10** are exemplary display screen formats for user interface dialog used in conjunction with the program logic of FIGS. **3-6.**

### DETAILED DESCRIPTION OF EXEMPLARY EMBODIMENTS

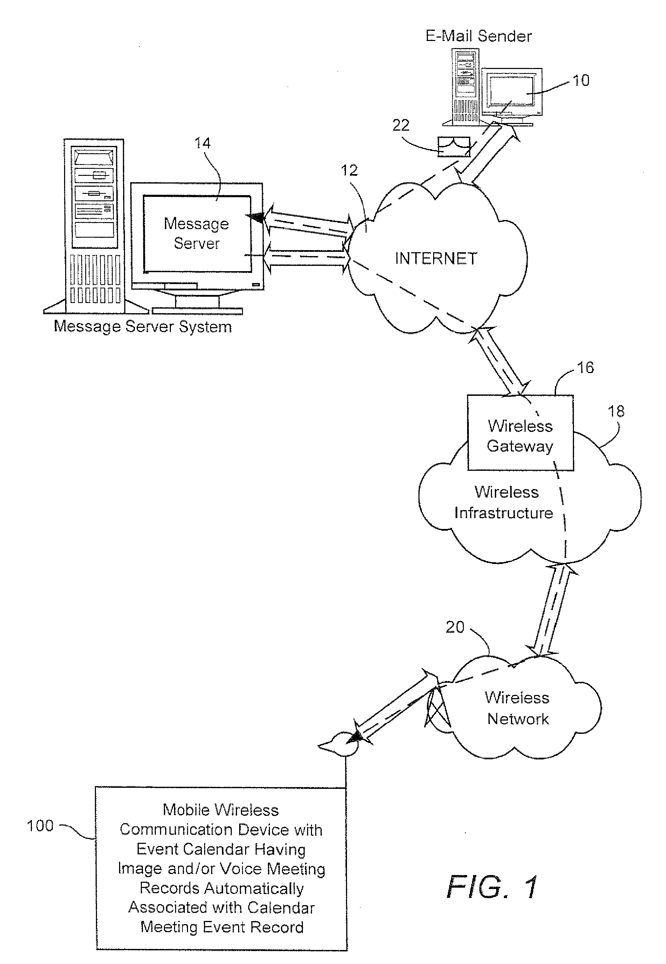

FIG. **1** is an overview of an exemplary communication system in which a wireless communication device **100** may be used in accordance with this exemplary embodiment. One skilled in the art will appreciate that there may be hundreds of different system topologies. There may also be many message senders and recipients. The simple exemplary system shown in FIG. **1** is for illustrative purposes only, and shows perhaps the currently most prevalent Internet email environment.

FIG. **1** shows an email sender **10,** the Internet **12,** a message server system **14,** a wireless gateway **16,** wireless infrastructure **18,** a wireless network **20** and a mobile communication device **100.**

An email sender **10** may, for example, be connected to an ISP (Internet Service Provider) on which a user of the system has an account, located within a company, possibly connected to a local area network (LAN), and connected to the Internet **12,** or connected to the Internet **12** through a large ASP (application service provider) such as America Online™ (AOL). Those skilled in the art will appreciate that the systems shown in FIG. **1** may instead by connected to a wide area network (WAN) other than the Internet, although email transfers are commonly accomplished through Internet-connected arrangements as shown in FIG. **1.**

The message server **14** may be implemented, for example, on a network computer within the firewall of a corporation, a computer within an ISP or ASP system or the like, and acts as the main interface for email exchange over the Internet **12.** Although other messaging systems might not require a message server system **14,** a mobile device **100** configured for receiving and possibly sending email will normally be associated with an account on a message server. Perhaps the two most common message servers are Microsoft Exchange™ and Lotus Domino™. These products are often used in conjunction with Internet mail routers that route and deliver mail. These intermediate components are not shown in FIG. **1,** as they do not directly play a role in the system described below. Message servers such as server **14** typically extend beyond just email sending and receiving; they also include dynamic database storage engines that have predefined database formats for data like calendars, to-do lists, task lists, email and documentation.

The wireless gateway **16** and infrastructure **18** provide a link between the Internet **12** and wireless network **20.** The wireless infrastructure **18** determines the most likely network for locating a given user and tracks the users as they roam between countries or networks. A message is then delivered to the mobile device **100** via wireless transmission, typically at a radio frequency (RF), from a base station in the wireless network **20** to the mobile device **100.** The particular network **20** may be virtually any wireless network over which messages may be exchanged with a mobile communication device.

As shown in FIG. **1,** a composed email message **22** is sent by the email sender **10,** located somewhere on the Internet **12.** This message **22** typically uses traditional Simple Mail Transfer Protocol (SMTP), RFC 822 headers and Multipurpose Internet Mail Extension (MIME) body parts to define the format of the mail message. These techniques are all well known to those skilled in the art. The message **22** arrives at the message sever **14** and is normally stored in a message store. Most known messaging systems support a so-called "pull" message access scheme, wherein the mobile device **100** must request that stored messages be forwarded by the message server to the mobile device **100.** Some systems provide for automatic routing of such messages which are addressed using a specific email address associated with the mobile device **100.** In a preferred embodiment, messages addressed to a message server account associated with a host system such as a home computer or office computer which belongs to the user of a mobile device **100** are redirected from the message server **14** to the mobile device **100** as they are received.

Regardless of the specific mechanism controlling forwarding of messages to mobile device **100,** the message **22,** or possibly a translated or reformatted version thereof, is sent to wireless gateway **16.** The wireless infrastructure **18** includes a series of connections to wireless network **20.** These connections could be Integrated Services Digital Network (ISDN). Frame Relay or T1 connections using the TCP/IP protocol used throughout the Internet. As used herein, the term "wireless network" is intended to include three different types of networks, those being (1) data-centric wireless networks, (2) voice-centric wireless networks and (3) dual-mode networks that can support both voice and data communications over the same physical base stations. Combined dual-mode networks include, but are not limited to, (1) Code Divisional Multiple Access (CDMA) networks, (2) the Group Special Mobile or the Global System for Mobile Communications (GSM) and the General Packet Radio Service (GPRS) networks, and (3) future third-generation (3G) networks like Enhanced Data-rates for Global Evolution (EDGE) and Universal Mobile Telecommunications Systems (UMTS). Some older examples of data-centric network include the Mobitex™ Radio Network and the DataTAC™ Radio Network. Examples of older voice-centric data networks include Personal Communication Systems (PCS) networks like GSM, and TDMA systems.

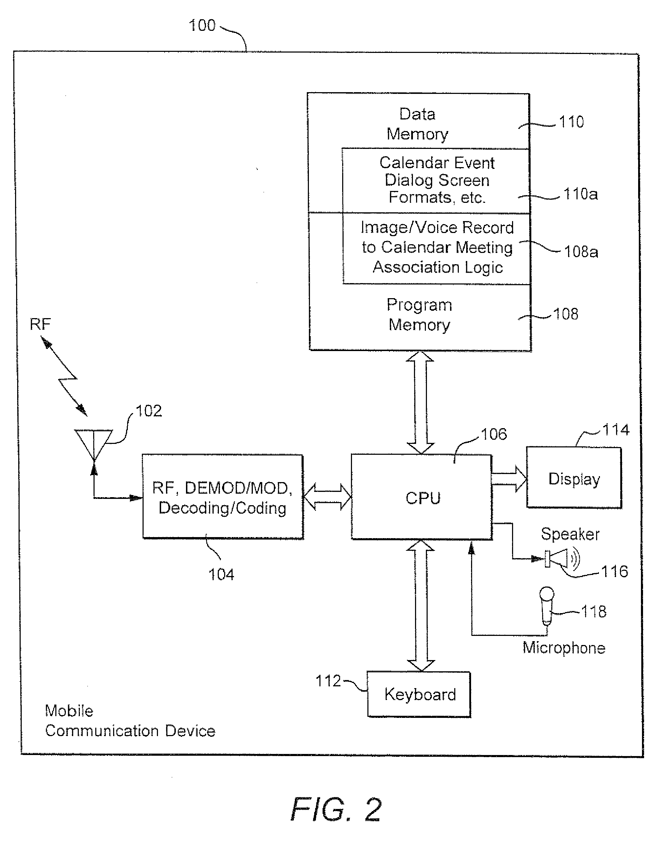

As depicted in FIG. **2,** mobile communication device **100** includes a suitable RF antenna **102** for wireless communication to/from wireless network **20.** Conventional RF, demodulation/modulation and decoding/coding circuits **104** are provided. As those in the art will appreciate, such circuits can involve possibly many digital signal processors (DSPs), microprocessors, filters, analog and digital circuits and the like. However, since such circuitry is well known in the art, it is not further described.

The mobile communication device **100** will also typically include a main control CPU **106** which operates under control of a stored program in program memory **108** (and which has access to data memory **110).** CPU **106** also communicates with a conventional keyboard **112,** display **114** (e.g., an LCD), audio output transducer or speaker **116** and an audio input transducer or microphone **118.** As those in the art will appreciate, it may be possible for a single transducer to serve as both speaker and microphone. A portion of data memory **110a** is available for storing calendar event data entry and function-selection dialog screen formats. Suitable computer program executable code is stored in portions of program memory **108a** to constitute the logic structure for automatically associating an image record (old or new) and/or a voice note record (old or new) with a calendar meeting event record as described below.

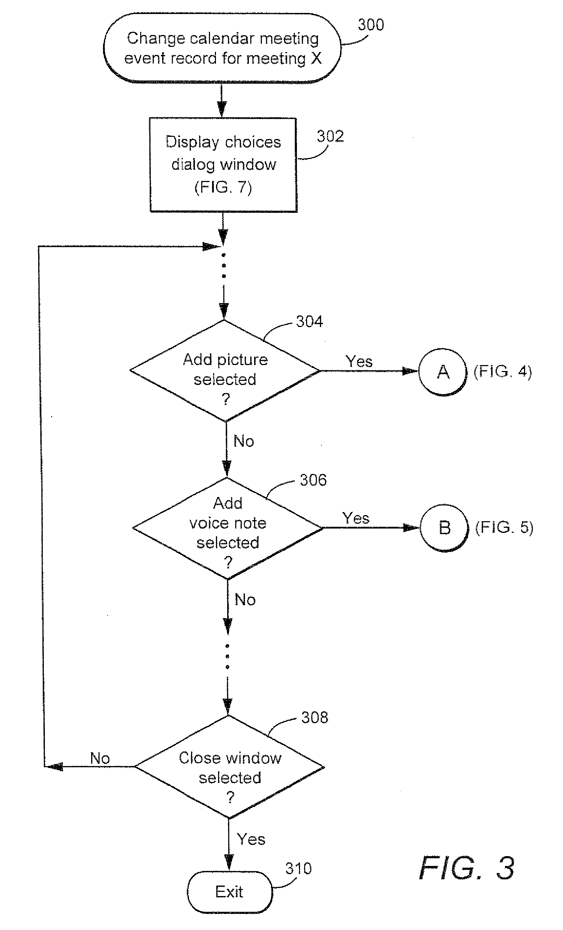

Using conventional computerized calendar user interface functionality, the user may navigate to block **300** in FIG. **3** to display a calendar meeting event record for a particular meeting X. Of course this particular meeting X may or may not be in progress. However, this exemplary embodiment is designed to facilitate use in real-time while the calendared meeting X is actually in progress.

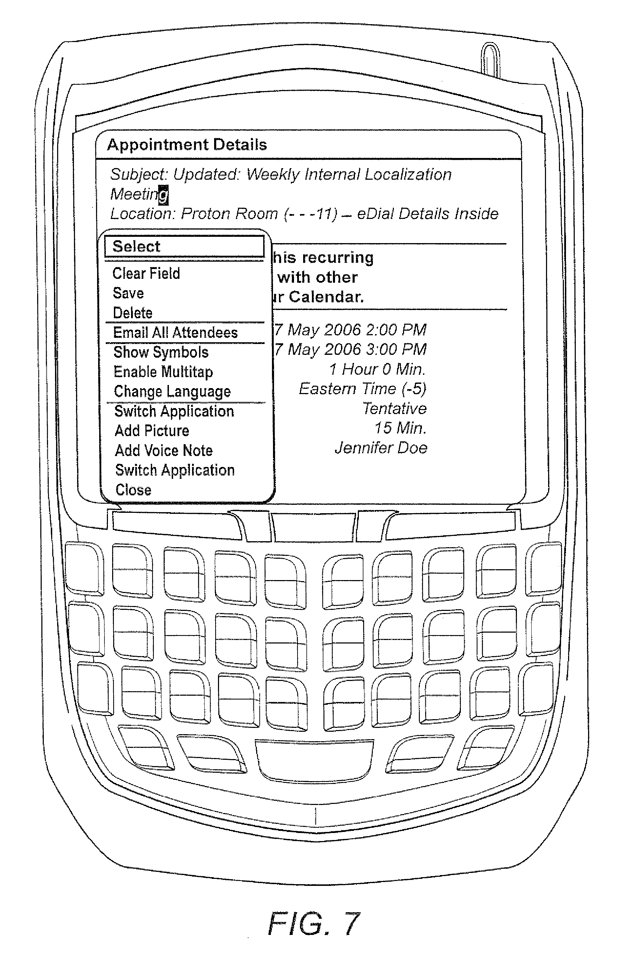

Once the meeting event record X has been opened, conventional user interface navigation also permits one to bring up a window of possible desired action items (e.g., a track ball may be clicked so as to cause a list of verbs to be displayed as represented by block **302** in FIG. **3).** The displayed choices dialog window may, for example, appear as shown in FIG. **7.** Among the choices presented are "add picture" and "add voice note".

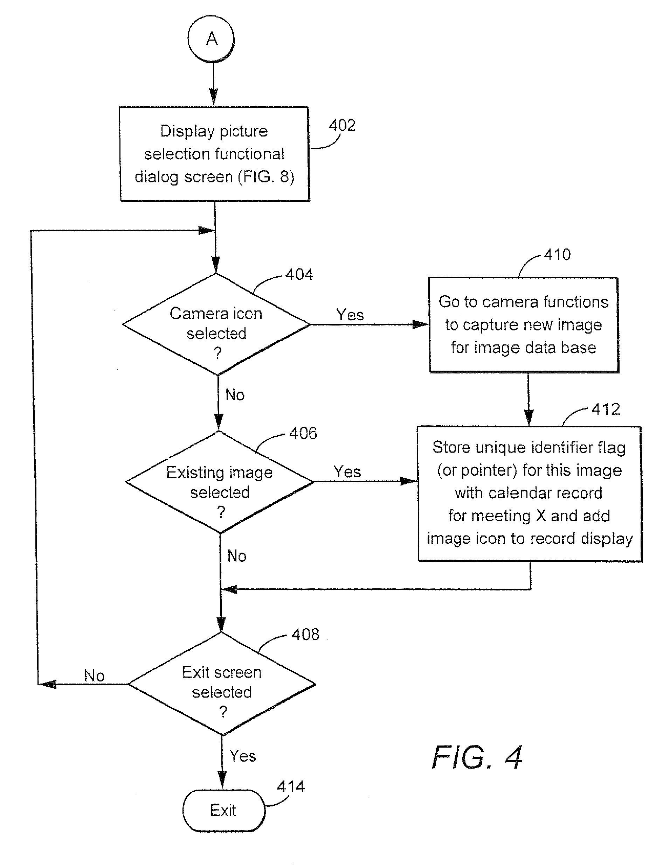

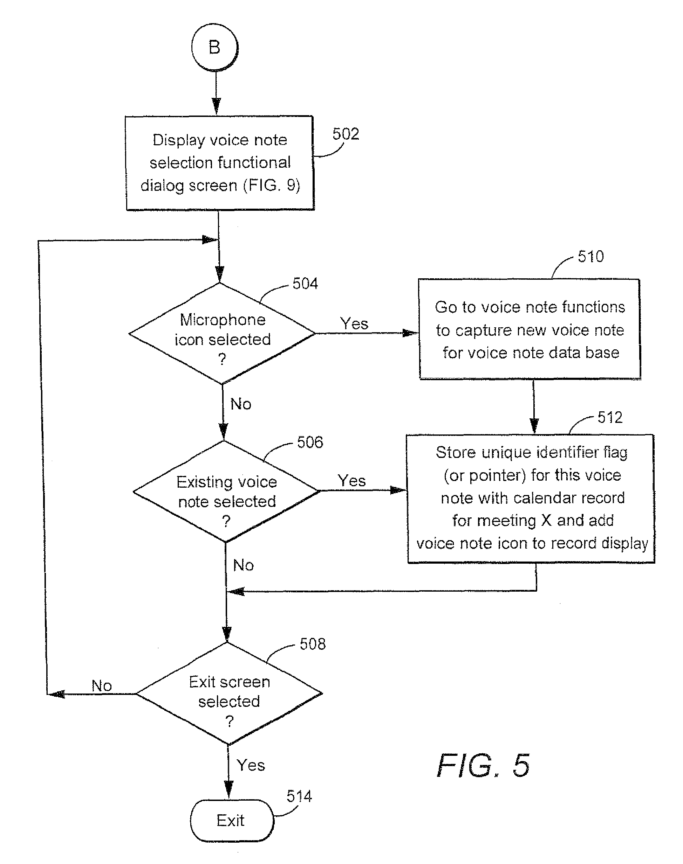

A user input monitoring loop comprising, inter alia, decision blocks **304, 306** and **308** in FIG. **3** can then detect if the user selectively activates the desired new function of "add picture" in which case decision block **304** causes a branch to the logic A shown in FIG. **4** -- or if "add voice note" has been selectively activated causing block **306** to transfer control to program logic B shown in FIG. **5.** Eventually, if no other selection is made, the user will select closure of the window at **308** (or the functional design of the GUI will naturally time out) so as to cause exit from this logic sub-routine at **310** in FIG. **3.**

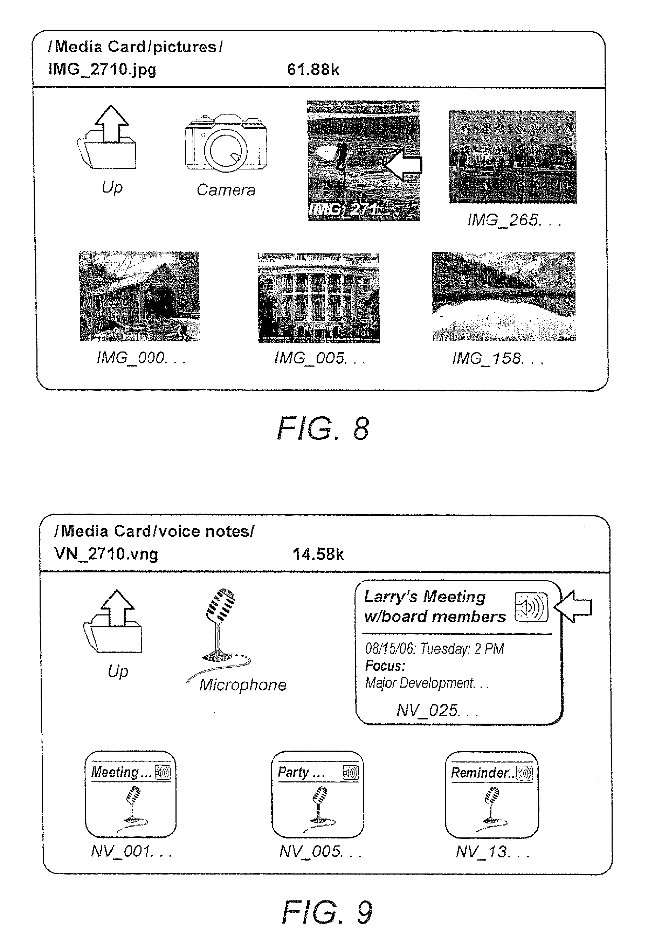

If the user has selected "add picture", then the program logic A shown in FIG. **4** is entered. A picture selection functional dialog screen is then displayed at **402.** One possible format for such a dialog screen is shown at FIG. **8.** Once again, a typical user input monitoring loop is entered comprising, inter alia, decision blocks **404, 406** and **408** in FIG. **4.** If the camera icon is selected, then a branch is made at **404** to conventional camera functions **410** so as to permit the user to capture a new image for the image data base. As those in the art will appreciate, the system may be designed to store the captured new image record directly in the currently opened calendar meeting event record. Otherwise, a unique identifier flag or pointer or the like for this particular image is stored at **412** in the calendarized meeting event record for this particular meeting X. Alternatively, as is evident from the user interface of FIG. **8,** the user may select an earlier already existing image. If so, this is detected at **406** and branch is automatically made to box **412** where a unique identifier flag or pointer or the like for that image is then automatically stored in association with the calendar record for meeting X (assuming, of course, that a copy of the selected image data is not itself stored in the record for meeting X). As also shown in box **412,** a suitable picture or image icon is automatically added to the displayed meeting X record.

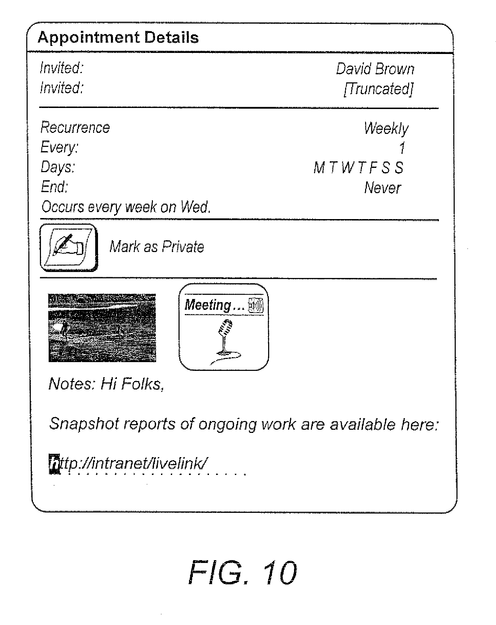

Eventually through user selection at **408** or otherwise in accordance with system design (e.g., a time out), exit from this routine will be taken at **414.** That is, once a user selects the picture (or captures a new picture), the selection screen of FIG. **8** is closed. As noted above, a small thumb nail or icon representing the now attached picture has been added to the calendar event screen as depicted in FIG. **10** (e.g., see the camera/picture icon/thumb nail that is visible just before the "notes" field).

A parallel set of user options is also provided via the logic B of FIG. **5** and the voice note selection screen of FIG. **9.**

Some portable wireless devices already provide an easy way to create voice notes and send them via MMS if MMS is provisioned and enabled. For example, a send voice notes icon in a home screen can be used to open a voice notes record screen and allow the user to record and preview a small voice note before sending it as an MMS message. Once the voice note is complete, the user can choose to send it to an MMS recipient. When sending a voice note as MMS, the recorded voice note may be accepted as an attachment for a new composed MMS message. At this point the GUI flow can follow the same screens as used in sending MMS pictures from a picture application.

That is, for example, after clicking OK in a dialog screen, a voice notes application program may start recording audio. There may be an image displayed indicating that the device is recording audio, a time elapsed display, and a percentage bar (indicating % of time used -- the maximum possibly being 100k or approximately 60s in some implementations). Upon finishing the recording, the user can be taken to another screen in which an MMS recipient can be selected from an address book, and then the user can be taken into an MMS compose screen, with a voice notes icon attached to an MMS message.

If the user has selected "add voice note" in the logic of FIG. **3,** program logic B shown in FIG. **5** is entered. A voice note selection functional dialog screen is then displayed at **502.** One possible format for such a dialog screen is shown at FIG. **9.** Once again, a typical user input monitoring loop is entered comprising, inter alia, decision blocks **504, 506** and **508** in FIG. **5.** If the microphone icon is selected, then a branch is made at **504** to conventional audio capture functions (e.g., see above) so as to permit the user to capture a new audio or voice note record for the audio record data base. As those in the art will appreciate, the system may also be designed to store the captured new audio record directly in the currently opened calendar meeting event record. Otherwise, a unique identifier flag or pointer or the like for this particular audio record is stored in the calendarized meeting event record for this particular meeting X at **512.** Alternatively, as is evident from the user interface of FIG. **9,** the user may select an earlier already existing voice note (or other audio record). If so, this is detected at **506** and branch is again automatically made to box **512** where a unique identifier flag or pointer or the like for that audio record is then automatically stored in association with the calendar record for meeting X (assuming, of course, that a copy of the selected audio record is not itself stored in the record for meeting X). As also shown in box **512,** a suitable voice note or audio record icon is automatically added to the displayed meeting X record.

Eventually through user selection at **508** or otherwise in accordance with system design (e.g., a time out), exit from this routine will be taken at **514.** That is, once a user selects the voice note (or captures a new voice note), the selection screen of FIG. **9** is closed. A small thumb nail or icon representing the now attached voice note will be added to the calendar event screen as depicted in FIG. **10** (e.g., see the audio/voice note icon/thumb nail that is visible just before the "notes" field).

In short, if a user selects the "add voice note" or "add picture" option, then an appropriate selection screen (e.g., FIG. **8** or **9)** gives the user an option of selecting from a list of existing images or voice notes stored on the device or recording a new one. If the user selects to create a new image or voice note, then it is recorded and automatically associated with the appropriate already selected and opened calendared meeting event record X. That is, when the selection process is finished (whether selecting an existing image/voice note or creating a new one), the selection screen closes automatically while the desired image or voice note is automatically associated with the correct meeting event record in the computerized calendar. For example, the voice note (or the image record) may be saved with a name that is created automatically using a naming convention that includes a reference to the calendar meeting event record X that the user currently has in an opened state.

As noted, the calendar event screen of FIG. **10** is also automatically updated to include a suitable small thumb nail/icon representing any attached image or voice note (e.g., see the appropriate icons that appear just prior to the "notes" field in FIG. **10).** By clicking such icon, the corresponding now associated auxiliary record is accessed and made available to any user thereafter viewing the calendar meeting event record.

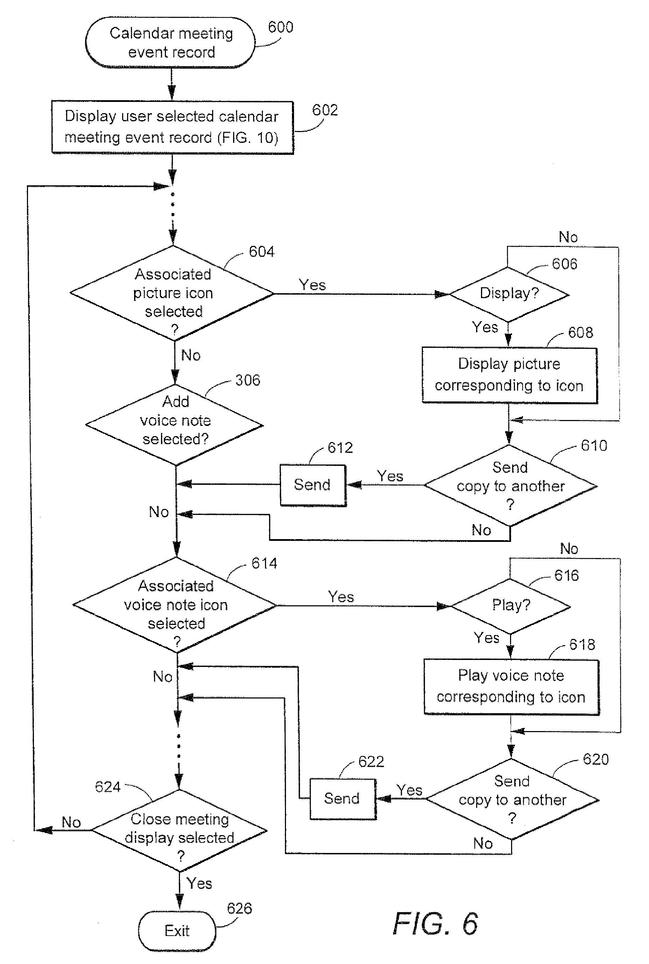

The calendar meeting event record logic entered at **600** in FIG. **6** causes display at **601** of a selected calendar meeting event record (e.g., see FIG. **10).** Among other options presented are those depicted in FIG. **6** where the user may select an associated picture icon at **604.** If so, then it may simply be displayed at **608** or, if desired, an option may be given at **606** to bypass the display and permit a sending option to be taken at **610.** If this option is taken, then a copy of the selected picture data is sent to others at **612** (e.g., by any suitable electronic messaging technique compatible with that particular device).

Similarly, an associated voice note icon may be selected at **614** to cause its being played (i.e., audio output created) at **618** either by default or by the option presented at **616.** A sending option is provided to the user at **620** which, if taken, causes a copy of the associated voice note to be sent to others via any compatible electronic messaging technique.

As those in the art will appreciate, the sending functions just mentioned may provide additional user options for sending to individuals or groups or to all meeting invitees, management level people, etc. Eventually the meeting display may be selectively closed at **624** by taking an exit at **626** from this sub-routine (if not alternatively exited via a suitable time-out process or otherwise as is compatible with the particular GUI in which this sub-system is incorporated).

While the above exemplary embodiment has been described at some level of detail, those in the art will understand that many modifications and variations may be made in such details while still retaining important novel features and advantages. All such modifications and variations are intended to be included within the scope of the appended claims.

## Claims

1. A method for operating a computerized event calendar in a portable wireless device, said method comprising:
(a) maintaining a computerized event calendar having meeting event records respectively associated with a chronological calendar entry in a portable wireless device; and
(b) providing a user option for creating or selecting an electronic image and/or audio auxiliary record in real-time during a calendar meeting event and automatically attaching such auxiliary record to the respectively associated meeting event record.

2. A method as in claim 1 further comprising
(c) displaying a meeting event record with an included visual indication of an attached auxiliary record, if any; and
(d) providing a user option for using said visual indication to recall an associated auxiliary record.

3. A method as in claim 2 further comprising:
(e) providing a user option for using said visual indication to send a copy of the corresponding associated auxiliary record to another party via electronic messaging.

4. A method as in claim 1 wherein step (b) includes automatically including a copy of the auxiliary record or a unique identifier of said auxiliary record in the respectively corresponding calendar meeting event record.

5. A method as in claim 1 wherein step (b) includes automatically naming a newly created auxiliary record with reference to a current user-selected open calendar meeting event record.

6. A method as in claim 1 wherein step (b) includes automatically including in a user-selected calendar meeting event record a pointer to a unique identifier of said auxiliary record.

7. A method as in claim 6 wherein step (b) includes automatically naming a newly created auxiliary record with reference to a user-selected currently open calendar meeting event.

8. A portable wireless device having a computerized event calendar, said device comprising:
(a) means for maintaining a computerized event calendar having meeting event records respectively associated with a chronological calendar entry, and
(b) means for providing a user option for creating or selecting an electronic image and/or audio auxiliary record in real-time during a calendar meeting event and automatically attaching such auxiliary record to the respectively associated meeting event record.

9. A portable wireless device as in claim 8 further comprising:
(c) means for displaying a meeting event record with an included visual indication of an attached auxiliary record, if any; and
(d) means for providing a user option for using said visual indication to recall an associated auxiliary record.

10. A portable wireless device as in claim 9 further comprising:
(e) means for providing a user option for using said visual indication to send a copy of the corresponding associated auxiliary record to another party via electronic messaging.

11. A portable wireless device as in claim 8 wherein means (b) includes means for automatically including a copy of the auxiliary record or a unique identifier of said auxiliary record in the respectively corresponding calendar meeting event record.

12. A portable wireless device as in claim 8 wherein means (b) includes means for automatically naming a newly created auxiliary record with reference to a current user-selected open calendar meeting event record.

13. A portable wireless device as in claim 8 wherein means (b)includes means for automatically including in a user-selected calendar meeting event record a pointer to a unique identifier of said auxiliary record.

14. A portable wireless device as in claim 13 wherein means (b) includes means for automatically naming a newly created auxiliary record with reference to a user-selected currently open calendar meeting event.

15. A digital storage medium containing a computer program which, when executed to operate a computerized event calendar in a portable wireless device, carries out a method comprising:
(a) maintaining a computerized event calendar having meeting event records respectively associated with a chronological calendar entry in a portable wireless device; and
(b) providing a user option for creating or selecting an electronic image and/or audio auxiliary record in real-time during a calendar meeting event and automatically attaching such auxiliary record to the respectively associated meeting event record.

16. A digital storage medium as in claim 15 wherein said method further comprises:
(c) displaying a meeting event record with an included visual indication of an attached auxiliary record, if any; and
(d) providing a user option for using said visual indication to recall an associated auxiliary record.

17. A digital storage medium as in claim 16 wherein said method further comprises:
(e) providing a user option for using said visual indication to send a copy of the corresponding associated auxiliary record to another party via electronic messaging.

18. A digital storage medium as in claim 15 wherein step (b) includes automatically including a copy of the auxiliary record or a unique identifier of said auxiliary record in the respectively corresponding calendar meeting event record.

19. A digital storage medium as in claim 15 wherein step (b) includes automatically naming a newly created auxiliary record with reference to a current user-selected open calendar meeting event record.

20. A digital storage medium as in claim 15 wherein sep (b) includes automatically including in a user-selected calendar meeting event record a pointer to a unique identifier of said auxiliary record.

21. A digital storage medium as in claim 20 wherein step (b) includes automatically naming a newly created auxiliary record with reference to a user-selected currently open calendar meeting event.
